(19) Europäisches Patentamt
European Patent Office
Office européen des brevets

(11) Veröffentlichungsnummer: **0 234 459 B1**

(12) **EUROPÄISCHE PATENTSCHRIFT**

(45) Veröffentlichungstag der Patentschrift: **02.11.89**

(21) Anmeldenummer: **87102111.9**

(22) Anmeldetag: **14.02.87**

(51) Int. Cl.[4]: **C09J 3/16,** C08G 18/70, C08G 18/64, C08L 97/02, B27D 1/00

(54) **Wässrige, Polyisocyanat-haltige Leimflottendispersionen, deren Herstellung und deren Verwendung.**

(30) Priorität: **26.02.86 DE 3606087**

(43) Veröffentlichungstag der Anmeldung:
**02.09.87 Patentblatt 87/36**

(45) Bekanntmachung des Hinweises auf die Patenterteilung:
**02.11.89 Patentblatt 89/44**

(84) Benannte Vertragsstaaten:
**AT BE CH DE FR GB IT LI NL SE**

(56) Entgegenhaltungen:
**DE-A- 2 336 381**
**GB-A- 1 205 893**
**US-A- 4 209 433**
**US-A- 4 396 738**

(73) Patentinhaber: **BAYER AG,**
**D-5090 Leverkusen 1 Bayerwerk(DE)**

(72) Erfinder: **Sachs, Hanns Immo, Dipl.-Ing., Semmelweisstrasse 149, D-5000 Köln 80(DE)**
Erfinder: **Larimer, Donald Richard, Ferdinandstrasse 26, D-5060 Bergisch Gladbach 2(DE)**

**EP 0 234 459 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft wäßrige, Polyisocyanat-haltige Leimflottendispersionen, welche formaldehydfrei sind und sich insbesondere für die Verleimung von Furnieren und Beschichtungsmaterialien auf Holz und Holzwerkstoffen eignen. Die wäßrigen Klebstoffsysteme werden durch Vermischen von Polyisocyanaten mit Streckmitteln auf Basis von Mehlen und wasserlöslicher oder nativer Stärke hergestellt, insbesondere indem wäßrigen Lösungen bzw. Mischungen von Stärke und Streckmehlen (Bohnen- bzw. Getreidemehlen), Polyisocyanaten oder ihren (wäßrigen) Emulsionen unter Rühren zugemischt werden.

Die so erhaltenen Klebstoffsysteme sind wäßrige Leimflottendispersionen mit erhöhter Gebrauchsdauer, die in bevorzugter Zusammensetzung 15 bis 30 Gew.-% Polyisocyanate, vorzugsweise mehrkernige Polyphenyl-polymethylen-polyisocyanat-(PMDI)-Gemische, 10 bis 15 Gew.-% kaltwasser lösliche Stärke, 14 bis 25 Gew.-% (Getreide-)Mehle sowie gegebenenfalls weitere Zusatzstoffe und eine entsprechende Menge an Wasser, die sich zu 100 Gew.-% aufaddiert, enthalten. Die erfindungsgemäßen Leimflottendispersionen sind auch mit Leimauftragsmaschinen gut verarbeitbar und zeigen bei geeigneten Auftragsmengen kein Durchschlagen bei Furnierverklebungen. Die Arbeitsgeräte können von den Leimflotten leicht durch Spülen mit Wasser gereinigt werden.

Es ist bekannt, daß bereits Leime auf der Grundlage von Harnstoff-Formaldehydkondensaten in großem Umfang für die Furnierung und Beschichtung von Holz und Holzwerkstoffen verwendet werden. Diese Leimflotten werden nach folgenden praxisüblichen Verfahren hergestellt: Ein Gemisch aus Harnstoff-Formaldehyd-harz, Härter, Wasser und gegebenenfalls organischen Streckmitteln (z.B. Mehl oder Stärke) und/oder Füllmitteln (z.B. Kreide, Kokosnußschalenmehl) wird angesetzt. Die Leimflotte wird mit Hilfe einer Walzenleimauftragsmaschine auf die Trägerplatte aufgetragen. Das Furnier oder Beschichtungsmaterial wird auf die Trägerplatte gelegt und heiß verpreßt. Besonders nachteilig bei solchen Leimsystemen auf der Basis von Aminoplasten ist das Abspalten von Formaldehyd während und nach dem Verpressen, weil dadurch die maximal zulässige Konzentrationen an Formaldehyd in der Raumluft in geschlossenen Räumen überschritten werden kann.

Aus diesem Grund werden bereits andere Klebstoffsysteme, die kein Formaldehyd abspalten, verwendet. Allgemein bekannt sind die sogenannten Weißleime auf der Grundlage von Polyvinylacetat (PVAc). Diese Leime können ebenfalls sowohl im Kalt- als auch im Heißverfahren verwendet werden. Ihr Einsatz ist allerdings durch einige Nachteile - bedingt durch die thermoplastischen Eigenschaften des Polyvinylcetats - beschränkt. So ist im Vergleich zu Kondensationsharz-Produkten eine geringere Wasser- und Wärmebeständigkeit festzustellen. Zusätzlich kommt es zu Problemen beim Schleifen und zu Verfärbungen (bei speziellen Holzarten, z.B. Eiche in Verbindung mit Eisen-Verunreinigungen sowie zu Problemen durch Dampfblasenbildung.

Aus der Veröffentlichung von Hackbarth, W. und W. v. Bockelmann "Dispersions-Isocyanatsysteme: Neue Klebstoffgeneration für die Holzindustrie", Adhäsion, 1982, 11, Seite 4-6, ist es bekannt geworden, daß durch Zusatz von Polyisocyanaten verbesserte PVAc-Leime erhalten werden, Hierbei werden die guten Verarbeitungseigenschaften von wäßrigen PVAc-Dispersionen mit den reaktiven Isocyanatklebstoffen vereint. Beständigere Verleimungen sind somit erreichbar. Die erwähnten Schleifprobleme und die Gefahr der Verfärbung bleiben allerdings bestehen.

In der DE-A-2 403 656 wird ein Verfahren zur Herstellung von wäßrigen Polyurethan-Leimsystemen auf der Basis von nieder- oder höhermolekularen Polyolen Di- bzw. Polyisocyanaten beschrieben, wobei außer oberflächenaktiver Substanzen auch Ligninsulfonat und/oder Dextrin und/oder Methylcellulose eingerührt werden. Polyurethan-Leimsysteme haben allerdings aus wirtschaftlichen Gründen nur in speziellen Verwendungsgebieten Eingang gefunden.

Aus der Veröffentlichung von Wittman, O. und H. Lehnert, "Diisocyanate als Bindemittel (Zur Herstellung von Holzwerkstoffen mit Diisocyanat)", Holz-Zentralblatt, 1976, S. 913-9 ist bekannt, daß mit nicht-wäßrigen Polyisocyanatklebstoffen wasserfeste Sperrholzverleimungen hergestellt werden können. Als nachteilig wird der starke Durchschlag sowohl von niedrigviskosen als auch von hochviskosen, nicht-wäßrigen Polyisocyanatklebstoffsystemen aufgeführt. Durch Zugabe von organischen Streckmitteln wird zwar der Durchschlag vermieden, die Systeme haben jedoch eine extrem kurze Gebrauchsdauer und zeigen eine zu schnelle Reaktion zwischen Polyisocyanat und Streckmittel. Auch bei der (Mit)Verwendung von Füllmitteln kann der Durchschlag nich vollständig vermieden werden. Außerdem wurde darauf hingewiesen, daß solche nicht-wäßrigen Polyisocyanat haltigen Klebstoffsysteme wegen der Verschmutzung der Walzen nicht mit konventionellen Leimauftragsmaschinen eingesetzt werden können. Gegebenenfalls sind auch die organischen Lösungsmittel störend (Entfernbarkeit, Umweltschutzprobleme, Preis bzw. Toxikologie).

Der Erfindung liegt als Aufgabe zugrunde, Polyisocyanathaltige Klebstoffsysteme zu entwickeln, die sowohl eine geeignete Viskosität und eine ausreichende Gebrauchsdauer aufweisen als auch insbesondere mit konventionellen, maschinellen Leimauftragsverfahren verarbeitet werden können. Erfindungsgemäß wird dies dadurch erreicht, daß Polyisocyanate in wäßrigen Systemen von Stärke und Mehlen emulgiert werden. Mit diesen preisgünstigen und einfachen Leimflotten kann das Durchschlagen von Polyisocyanaten durch das Furnier verhindert werden.

Für die Herstellung der erfindungsgemäßen Leimflottendispersionen wird beispielsweise Polyisocyanat in ein wäßriges Gemisch (Suspension) aus Mehl (Bohnen- und/oder Getreidemehl) und Stärke (kaltwasserlösliche oder aufgeschlossene native Stärke) eingerührt. In dem wäßrigen dickflüssigen Gemisch aus (kaltwasser)löslichlicher Stärke und Getreidemehl ist das Emulgieren des Polyisocyanats einfach, z.B. mit Hilfe einfacher Rührer; ein Einsatz von stark emulgierenden wirkenden, hochtourig laufenden Mischgeräten wie z.B. Ultra-Turrax® ist nicht notwendig. Diese so erhaltene wäßrige Leimflottendispersion bleibt auch stabil. Erstaunlicherweise wird durch die Kombination der organischen Streckmittel die Gebrauchsdauer der Leimflottendispersion wesentlich verlängert. Dies kann durch Feststellung des Gehaltes an freiem NCO in der erfindungsgemäßen Leimflotte bzw. Feststellung der Viskosität leicht verfolgt werden.

Nach einer bevorzugten Ausführungsform der Erfindung besteht die wäßrige Leimflottendispersion aus 7 bis 50 Gew.-%, bevorzugt 10 bis 40 Gew.-%, bezogen auf die Leimflottendispersion, Polyisocyanat, besonders bevorzugt 15 bis 30 Gew.-% Polyisocyanat, 5 bis 20 Gew.-%, bevorzugt 10 bis 15 Gew.-% (kaltwasser)löslicher Stärke, 10 bis 35 Gew.-%, bevorzugt 14 bis 25 Gew.-% Mehlen und zum Rest aus Wasser und gegebenenfalls üblichen Additiven, z.B. Katalysatoren oder Stabilisatoren. Ein Anteil von 18 bis 22 Gew.-% Polyisocyanaten, insbesondere Polyphenyl-polymethylen-polyisocyanaten, in der Leimflottendispersion ist besonders bevorzugt, insbesondere bei Anwesenheit von 10 bis 15 Gew.-%, vorzugsweise 11 bis 14 Gew.-% kaltlöslicher Stärke und 14 bis 25 Gew.-% an Mehlen auf Getreidebasis, vorzugsweise Roggenmehl.

Als Polyisocyanate können solche eingesetzt werden, welche eine mittlere Funktionalität von mehr als 2,0, vorzugsweise $\geqq$ 2,3, insbesondere $\geqq$ 2,5 und eine Funktionalität bis zu 4, vorzugsweise bis zu 3 aufweisen. Ihre Viskosität sollte nicht zu hoch liegen und vorzugsweise 50-5000 mPa.s/25°C insbesondere 50-1250 mPas 25°C betragen. Bevorzugt werden Polyisocyanate mit aromatisch gebundenen NCO-Gruppen.

Die Polyisocyanate können Polyphenyl-polymethylen-polyisocyanate (PMDI), Triphenylmethantriisocyanate, (Thio)-Phosphorester-triisocyanate oder andere, typische Klebstoffisocyanate mit 3 NCO-Gruppen sein. Sie können auch durch Biuretisierung, Dimerisierung, Trimerisierung, Carbodiimidisierung oder durch Umsetzung von Di-/Polyisocyanaten mit polyfunktionellen (z.B. 3 bis 5-funktionellen), vorzugsweise niedermolekularen Verbindungen (z.B. mit Molekulargewichten bis 399), wie Polyolen, Polyaminoalkoholen, oder Polyaminen hergestellt worden sein.

Weniger bevorzugt sind NCO-Prepolymere auf Basis von Diisocyanaten und höhermolekularen Polyolen, z.B. solchen mit Molekulargewichten von 400 bis 10 000.

Die Polyisocyanate können als solche oder als Gemische eingesetzt werden. Eine Reihe von geeigneten Polyisocyanaten sind auch in der DE-OS 31 08 538, ab Seite 5 aufgeführt.

Als Polyisocyanate sind insbesondere solche mehrkernigen Polyphenyl-polymethylen-polyisocyanate der allgemeinen Formel

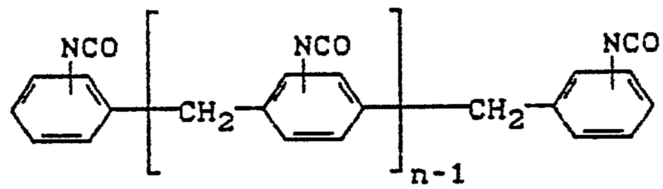

oder deren Gemische mit einer mittleren Funktionalität bis 4,
in welcher
n eine ganze Zahl zwischen 1 und 5 bedeutet,
geeignet, welche bevorzugt eine Viskosität von 50 bis 5000, besonders vorzugt 50-1250 und insbesondere 100 bis 600 mPas/25°C aufweisen und die einen NCO-Gehalt von 26 bis 33 Gew.-%, vorzugsweise 28 bis 32,5 Gew.-%, sowie eine mittlere Funktionalität von $\geqq$ 2,3 (n im Mittel $\geqq$ 1,3), vorzugsweise $\geqq$ 2,5 (n im Mittel $\geqq$ 1,5) aufweisen. Der Gehalt an niedermolekularen Monoisocyanaten (z.B. Phenyl isocyanat (entstehend aus Restmengen an nicht-kondensiertem Anilin) soll möglichst niedrig ($\leqq$ 20 ppm, vorzugsweise $\leqq$ 10 ppm) liegen.

Der Vorteil dieser Polyphenyl-polymethylen-polyisocyanate liegt darin, daß sie großtechnisch und preisgünstig zugängliche Polyisocyanate darstellen und in ihrem NCO-Gehalt, in ihre Funktionalität/Mehrkerngehalt leicht und breit modifiziert werden können.

Diese Polyisocyanate werden z.B. durch säurekatalysierte Kondensation von Anilin und Formaldehyd und anschließende Phosgenierung des so erhaltenen Gemisches an Polyarylaminen, wie beispielsweise in der US-Patentschrift 34 71 543 (DE-OS 15 93 638) beschrieben hergestellt. Eine ähnliche technische Lehre wird auch in den deutschen Offenlegungsschriften 19 13 473, 19 37 685 und 20 32 336 gegeben. Allen beschriebenen Verfahren ist gemeinsam, daß in der Kondensationsstufe ein Polyarylamingemisch erhalten wird, welches etwa 45 bis 65 Gew.-% an Diphenylmethandiaminen neben einer relative großen Menge an drei- und mehrkernigen Produkten enthält. Bei der anschließenden Umsetzung dieses Polyarylamingemisches mit Phosgen entstehen Polyisocyanate der obigen Formel, in welchen das Verhältnis von bi- und höherfunktionellen Verbindungen praktisch mit jenem auf der Aminstufe identisch ist. Das so erhaltene sogenannte rohe Diphenylmethandiisocyanat (welches eigentlich ein Gemisch aus Di- und Polyisocyanaten darstellt) kann direkt als solches eingesetzt werden, wenn es den Bedingungen entspricht. Es ist auch möglich, aus dem rohen Diphenylmethandiisocyanat kleine Mengen an reinem Diphenylmethandiisocyanat (4,4'- und gegebenenfalls 2,4'- und/oder 2,2'-Isomeren) abzudestillieren (siehe z.B. US-Patentschrift 34 71 543) und den verbleibenden Rest, in welchem die höherfunktionellen Polyisocyanate der obigen Formel angereichert sind, einzusetzen. Wird praktisch das gesamte Diphenylmethandiisocyanat aus einem solchen rohen Diphenylmethandiisocyanat entfernt, wie es beispielsweise in der US-Patentschrift 31 63 666 (DE-PS 10 90 196) beschrieben wird, so erhält man einen sehr hochviskosen (ca. 10 000 mPas) Destillationsrückstand, der nur bei Temperaturen oberhalb ca. 100°C noch fließfähig, daher schwer handhabbar und üblich nicht mehr zu verwenden ist (siehe auch DE-OS 21 05 193).

Eine weitere Möglichkeit zu reinem Diphenylmethandiisocyanat zu gelangen, besteht darin, nach der Lehre der US-Patentschrift 32 74 245 (DE-PS 12 05 975) bereits auf der Aminstufe reines Methylendianilin durch fraktionierte Destillation im Hockvakuum aus dem technischen Anilin/Formaldehyd-Kondensat abzutrennen und das Diamin anschließend zu phosgenieren. Auch in diesem Falle kann der anfallende Destillationsrückstand an höherkernigen Polyarylaminen phosgeniert werden.

Es sind Verfahren entwickelt worden (siehe z.B. DE-OS 23 56 828), mit denen rohes Diphenylmethandiisocyanat hergestellt werden kann, welches bereits mehr als 80 Gew.-%, vorzugsweise mehr als 90 Gew.-%, an reinem 4,4'-Diisocyanatodiphenylmethan enthält. Die bei der destillativen Aufarbeitung von rohem Diphenylmethandiisocyanat dieses Typs entstehenden, nicht destillierten Bodenfraktionen, welche eine Anteil an mehrkernigen Polyisocyanaten enthalten und nicht zu hohe Viskositäten aufweisen, sind gleichfalls einsetzbar. Auch ein Polyphenylpolymethyl-polyisocyanat-Gemisch, in welchem 4,4'-Diisocyanatodiphenylmethan gegenüber 2,4'-Diisocyanatodiphenylmethan angereichert ist, kann direkt durch entsprechende Steuerung der Anilin/Formaldehyd-Kondensation erhalten werden. Die US-Patentschrift 32 77 173 beschreibt z.B. ein derartiges Verfahren zur Herstellung von Polyamingemischen der Diphenylmethanreihe mit einem hohen Gehalt an 2,4'-Diaminodiphenylmethan. Durch Phosgenierung dieser 2,4'-Diaminodiphenylmethan-reichen Kondensate können dann direkt die am entsprechenden Isomeren angereicherten Polyisocyanate erhalten werden. Auch in der deutschen Offenlegungsschrift 19 37 685 sowie den US-Patentschriften 32 60 751 und 33 62 979 werden Wege zu an 2,4'-Diisocyanatodiphenylmethan angereicherten Polyisocyanatgemischen gewiesen. Aus diesen Gemischen kann das 2,4'-Diisocyanatodiphenylmethan durch fraktionierte Destillation im Vakuum in der gewünschten Reinheit entfernt werden. Die bei der fraktionierten Destillation anfallende Bodenfraktion ist zur Verklebung der lignose-cellulosehaltigen Werkstoffe geeignet, sofern die nicht destillierten Bodenfraktionen die höheren Zusammensetzungen aufweisen. Geeignete Polyisocyanate sind z.B. Polyphenyl-polymethylenpolyisocyanate aus einem Polyphenyl-polymethylen-polyisocyanat, das 35 bis 70 Gew.-% an Diisocyanato-diphenylmethanen, davon 1 bis 8 Gew.-% 2,4'-Diisocyanatodiphenylmethan und 0 bis 2 Gew.-% 2,2'-Diisocyanatodiphenylmethan, enthält, eine Viskosität bei 25°C von 50 bis 600 mPas und einen NCO-Gehalt zwischen 28 und 32 Gew.-% aufweist und das durch Phosgenierung der nicht destillierten Bodenfraktion, wie sie bei der Entfernung von 25 bis 90 Gew.-% an 2,2'-, 2,4'-und/oder 4,4'-Diaminodiphenylmethan aus einem Anilin/Formaldehyd-Kondensat entsteht, erhalten wurde oder die nicht destillierbare Bodenfraktion darstellt, wie sie bei der Entfernung von 25 bis 90 Gew.-% an 2,2'-, 2,4,'-und/oder 4,4'-Diisocyanatodiphenylmethan aus dem rohen Phosgenierungsprodukt eines Anilin/Formaldehyd-Kondensats erhalten wurde.

Die Bodenfraktionen werden beispielsweise bei Entfernung von 45 bis 90 Gew.-%, vorzugsweise 55 bis 85 Gew.-% an Diisocyanato-diphenylmethanen aus einem rohen Diphenylmethandiisocyanat erhalten, welches mehr als 85 Gew.-%, vorzugsweise mehr als 90 Gew.-% an Diisocyanatodiphenylmethanen enthält. Ein solches rohes Diphenylmethandiisocyanat ist beispielsweise nach dem Verfahren der DE-OS 23 56 828 zugänglich.

Eine andere Möglichkeit besteht darin, aus einem rohen Phosgenierungsprodukt mit einem Gehalt an Diisocyanatodiphenylmethanisomeren von 60 bis 90 Gew.-%, vorzugsweise 65 bis 75 Gew.-%, welches 20 bis 60, vorzugsweise 30 bis 40 Gew.-% an 2,4'- und/oder 4,4'- bzw. 2,2'-Isomeren enthält, 25 bis 80 Gew.-%, vorzugsweise 30 bis 60 Gew.-% an 2,4'-Diisocyanatodiphenylmethan und gegebenenfalls 4,4'- bzw. 2,2'-Diisocyanatodiphenylmethan abzudestillieren. In jedem Fall kann dabei die Destillation so geführt werden, daß der Rückstand die erfindungsgemäß erforderliche Zusammensetzung aufweist. Die Herstellung geeigneter Polyisocyanate ist beispielsweise in der DE-AS 27 11 958 als Polyisocyanate A bis D, und F und G beschrieben (Seite 12/13).

Selbstverständlich ist es jedoch auch möglich (und in vielen Fällen in der Praxis auch einfacher), die gewünschte Isomeren- und Oligomerenzusammensetzung des Polyisocyanatgemisches durch Verschneiden verschiedener Komponenten, z.B. verschiedener Bodenfraktionen, zu erhalten.

Erfindungsgemäß können die Polyisocyanatgemische auch in Kombination mit Polyhydroxylverbindungen vorzugsweise höhermolekularen Polyhydroxylverbindungen, wie sie aus der Polyurethanchemie an sich bekannt sind, in einem NCO/OH-Verhältnis von 1,5:1 bis 10:1, vorzugsweise 2:1 bis 5:1, eingesetzt werden. Es ist dabei möglich, die beiden Komponenten getrennt oder als reaktives Gemisch einzusetzen. Es ist auch möglich, die chemische Reaktion zwischen Polyisocyanaten, zu verklebenden lignosecellulosehaltigem Material, Streckmitteln, und gegebenenfalls Polyhydroxylverbindungen durch Additive wie Stabilisatoren, Katalysatoren und Aktivatoren in üblichen Mengen, z.B. einer Menge von 0,05 bis 5 Gew.-%, bezogen auf Feststoffe der Leimflotten, zu verwenden.

Erfindungsgemäß geeignete Polyhydroxylverbindungen haben ein Molekulargewicht in der Regel von 400 bis 10 000, vorzugsweise 1000 bis 6000. Es sind dies z.B. mindestens zwei, in der Regel 2 bis 8, vorzugsweise aber 2 bis 4, Hydroxylgruppen aufweisende Polyester, Polyether, Polythioether, Polyacetale, Polycarbonate und Polyesteramide oder ihre Gemische, wie sie für die Herstellung von Polyurethanen an sich bekannt sind. Sie werden beispielweise in der DE-AS 27 11 958, Spalte 6 bis 9, ebenso wie geeignete Additive ausgeführt und können dieser Veröffentlichung beispielhaft entnommen werden.

Die einzusetzenden Polyisocyanate können vor ihrer Emulgierung oder auch während ihrer Emulgierung modifiziert werden, z.B. durch Zusatz emulgierend wirkender Verbindungen, z.B. Polyvinylalkoholen (DE-PS 853 438, US 31 78 310, DE-OS 27 24 364), Monoalkylethern von Polyoxyethylenglykolen (DE-PS 853 438, DE-OS 24 47 135, US-PS 31 78 310), Polyoxyethylenglykolen (DE-PS 27 03 271, EP-A 166 264), ferner Modifizierungen entsprechend GB-PS 20 93 780, DE-PS 31 09 317, US 42 58 169, US-PS 42 57 995, DE-PS 29 32 175, DE-OS 3 111 562, DE-OS 3 108 538 (d.h. mit Phosphoresterverbindungen), oder mit Sulfonsäuren entsprechend EP-PS 19 486. In Frage kommen auch oberflächenaktive Substanzen gemäß DE-PS 1 081 225 (Ethoxylierungsprodukte von Monoalkoholen, Monoaminen, Monomercaptanen oder Alkylmonophenolen) oder cyclische, hydrophile Emulgatoren entsprechend DE-OS 3 062 328/DE-OS 060 545.

Während sich relative höhere Mengen an emulgierend wirkenden Zusätzen im allgemeinen etwas festigkeitsvermindernd auf die Verklebung auswirken, sind modifizierte Polyisocyanate mit relativ geringen Mengen an emulgierend wirksamen Mitteln vorteilhaft verwendbar. Obwohl eine mengenmäßige Festlegung nur relativ möglich ist, so sind die bevorzugten, emulgierend wirkenden Zusatzmengen im allgemeinen ≦ 3 Gew.-%, vorzugsweise ≦ 1,5 Gew.-%, bezogen auf die Polyisocyanat-Menge.

Die erfindungsgemäßen wäßrigen Leimflottendispersionen können auch mit den in der Holzwerkstoffindustrie bisher überwiegend eingesetzten wäßrigen Lösungen von Leimen, von Kondensationsprodukten aus Formaldehyd mit Harnstoff und/oder Melamin und/oder Phenol kombiniert werden, aber auch mit anderen, bisher weniger üblichen Binde- und Imprägniermitteln, wie z.B. Sulfitablauge oder Tannin, wobei ein Mischungsverhältnis der erfindungsgemäßen mit diesen zu sätzlichen Bindemitteln zwischen 1:10 und 10:1, eingehalten werden sollte.

Die erfindungsgemäß zum Einsatz kommenden Stärken sind entweder kaltwasserlösliche Stärke oder aufgeschlossene, native Stärken. Native Stärken können durch Erhitzen ihrer wäßrigen Suspensionen auf erhöhte Temperaturen, z.B. ≧ 70°C, wasserlöslich gemacht werden. Besonders geeignet sind viskositätsstabile, kaltwasserlösliche Stärken (z.B. Amijel VA 159, Fa. Maizena Hamburg-BRD).

Als Streckmehle können sowohl Bohnenmehle als auch Getreidemehle, insbesondere Weizen- und besonders bevorzugt Roggenmehle verwendet werden. Auch Getreidemehlmischungen sind geeignet. Die Vermischung von Stärkelösung und Mehl erfolgt vorzugsweise etwa bei Raumtemperatur, z.B. 10 bis 35°C. Die wäßrige Mischung stellt eine homogene, breiartige, weiß bis hellbraun, (je nach Mehlsorte) aussehende, wäßrige Suspension dar, die im allgemeinen sehr konzentriert ist.

Gegebenenfalls können in üblichen Mengengrenzen weitere Hilfsstoffe verwendet werden, z.B. Farbstoffe, Aufheller, Pigmente, Stabilisatoren, Emulgatoren, Konservierungsmittel, Desinfektionsmittel, Katalysatoren oder inerte oder reaktive Füllstoffe.

Nach dem erfindungsgemäßen Verfahren zur Herstellung der Leimflottendispersionen kann beispielsweise

a) in den Wasseranteil der Anteil an kaltwasserlöslicher Stärke (bei etwa gleichbleibender Zugabegeschwindigkeit) eingerührt werden, danach wird bei ca. 500 bis 1000 Upm etwa 10 Minuten lang bei 20 bis 25°C gerührt, um die Stärke vollständig aufzulösen, dann wird

b) in dieses Gemisch das Mehl bei etwa gleichbleibender Zugabegeschwindigkeit eingemischt, bis eine homogene Suspension vorliegt und

c) schließlich wird das flüssige oder in einer Teilmenge Wasser emulgierte Polyisocyanat unter Rühren bei niedrigen Temperaturen (≦ 45°C, vorzugsweise bei Raumtemperatur) zugegeben und homogen vermischt.

Nach einer anderen Ausführungsform wird die Leimflottendispersion in der Weise hergestellt, daß

a) in den Wasseranteil der Anteil an nativer Stärke eingerührt wird, unter Rühren, z.B. 500 bis 1000 Upm, das Gemisch auf ca. 90°C erhitzt wird und bei dieser Temperatur belassen wird, bis die Stärke aufgeschlossen löslich ist. Danach wird das Gemisch auf Raumtemperatur abgekühlt,

b) in dieses Gemisch das Mehl bei gleichbleibender Zugabegeschwindigkeit unter Rühren eingemischt, bis eine homogene Mischung vorliegt und

c) anschließend wird das Polyisocyanat oder eine wäßrige Polyisocyanat-Emulsion zugegeben und homogen vermischt.

Man kann auch einer wäßrigen Emulsion des Polyisocyanats die Stärkelösung zugeben und dann erst das Mehl einrühren.

Die Verfahrensweisen können auch kontinuierlich gestaltet werden. So kann man einer Stärkelösung kontinuierlich dosiert Mehl zumischen, über statische oder dynamische Mischvorrichtungen homogenisieren und diese Stärke/Mehllösung mit einem Strom des Polyisocyanats oder seiner (gegebenenfalls kontinuierlich hergestellten) Polyisocyanatemulsion kontinuierlich vermischen und austragen. Die Polyisocyanatkomponente kann zur besseren Vermischung auch beispielsweise unter Druck eingedüst werden. Eine Vermischung kann auch entsprechend DE-OS 3 420 997 erfolgen.

Die Konsistenz der Stärke/Mehl-Mischung wird vorzugsweise so eingestellt, daß ihre Viskosität 500 bis 1000 mPas/25°C, vorzugsweise 1000 bis 4000 mPas/25°C beträgt. Nach der Einmischung der Polyisocyanate ändert sich im allgemeinen die Viskosität nicht sehr wesentlich. Die erfindungsgemäßen Leimflottendispersionen haben somit üblicherweise Viskositäten zwischen 500 und 10.000 mPas/25°C, vorzugsweise 1000 bis 4000 mPas/25°C (gemessen mit einem Rotations-Viskosimeter von Haacke Drehkörper TI).

Die Mengen an Polyisocyanat und Streckmitteln, sowie gegebenenfalls üblicher Additive wird insbesondere so gewählt, daß die wäßrige Leimflotten-Dispersionen mit einem Gesamtfeststoffgehalt von 22 bis 65 Gew.-%, vorzugsweise 29-65 Gew.-%, insbesondere 45-62 Gew.-% erhalten werden.

Gegenstand der Erfindung sind somit Verfahren zur Herstellung von wäßrigen, Polyisocyanat-haltigen, stabilen Leimflottendispersionen mit einem Feststoffgehalt von 22-65 Gew.-%, die dadurch gekennzeichnet sind, daß man 7 - 50 Gew.-% Polyisocyanate mit einer mittleren Funktionalität > 2,0 und als Streckmittelkombination

5- 20 Gew.-% wasserlösliche Stärke und 10 - 35 Gew.-% Mehle,

gegebenenfalls unter Zusatz üblicher Additive in Wasser verrührt.

Insbesondere werden wäßrige Stärkelösungen mit den Mehlen vermischt und in dieser Suspensionen das Polyisocyanat beiTemperaturen bis 45°C emulgiert oder in wäßrige Stärkelösungen des Polyisocyanat emulgiert und aschließend die Mehle eingemischt.

Gegenstand der Erfindung sind auch 22-65 Gew.-% wäßrige Polyisocyanat-haltige, stabile Leimflottendispersionen mit Viskositäten in Bereich von 500 bis 10.000 mPas/25°C, enthaltend

7 - 50 Gew.-% Polyisocyanate mit einer mittleren Funktionalität > 2,0 und als Streckmittelkombination

5 - 20 Gew.-% löslicher Stärke und 10 - 35 Gew.-% Mehlen

Insbesondere bevorzugte Dispersionen sind solche, die 15 - 30 Gew.-% aromatische Polyisocyanate mit einer mittleren Funktionalität > 2,0

10 - 15 Gew.-% lösliche Stärke und 14 - 25 Gew.-% Mehlen

gegebenenfalls untergeordneter Mengen üblicher Additive enthalten und einen Feststoffgehalt von 29-65 Gew.-% und eine Viskosität im Bereich von 1000 bis 4000 mPas/25°C aufweisen.

In den erfindungsgemäßen Leimflottendispersionen werden als Polyisocyanate insbesondere Polyphenyl-polymethylen-polyisocyanate, welche eine Viskosität von 50-5000 mPas/25, vorzugsweise 50-1250 mPas und einen NCO-Gehalt von 26 bis 33 Gew.-% und eine mittlere Funktionalität > 2, vorzugsweise ≧ 2,3 aufweisen, verwendet.

Die Leimflottendispersionen sind somit in den üblichen Leimauftragsvorrichtungen ohne Schwierigkeiten verwendbar; sie können in ständigem Überlauf mit Rückführung ohne Verklebungs-oder Verkrustungsgefahr verwendet werden. Von besonderer technischer Bedeutung ist jedoch, daß auch die Reinigung der Maschinen in einfacher Form mittels Wasser erfolgen kann.

Läßt man die Leimflottendispersionen ungerührt stehen, so sind sie bis etwa 3 Stunden in etwa unverändert gebrauchsfähig, bevor sie in einen pastöseren Zustand übergehen. Der NCO-Abfall in den wäßrigen Leimflottendispersionen ist überraschend gering. Offensichtlich bilden sich an den Oberflächen der emulgierten Polyisocyanattröpfchen stabilisierende Strukturen aus, welche die Weiterreaktion mit Wasser stark verzögern. Trotzdem ist bei dem Verklebungsvorgang eine gute Verklebungswirkung gegeben.

Die Streckmittel (Stärken und Mehle) sind nicht nur zur Einstellung geeigneter Viskositäten der Leimflottendispersionen und ihrer Stabilität notwendig, sie leisten gleichzeitig einen aktiven Beitrage zur Verklebung (neben den Polyisocyanaten). Die erfindungsgemäßen, wäßrigen Polyisocyanate und Streckmittel-haltigen Leimflottendispersionen besitzen auch eine gut Homogenität, ausreichend lange Gebrauchsdauer und sind leicht verarbeitbar und auftragbar; sie besitzen darüber hinaus gewisse fugenfüllend wirksame Eigenschaften womit sie mit gewisse Unebenheiten, z.B. zwischen Furnier-und Spanplatten auszugleichen vermögen. Die offene Zeit nach Auftrag der Leimflotten ist hinreichend groß, um auch Korrekturen an den zu verklebenden Furnierlagen noch vornehmen zu können. Durch Mitverwendung kaltwasserlöslicher Stärke werden die Dispersionen sahnig und die Leimflotte leicht kaltklebrig, was sich beides beim Auftragen der Leimflottendispersionen positiv bemerkbar macht.

Von den erfindungsgemäß zum Einsatz kommenden Streckmitteln unterscheiden sich "Füllmittel", z.B. Kokosnußschalenmehl, Holzmehl, Walnußschalenmehl, Kaolin, Gesteinsmehle oder Kreide, welche lediglich zur Verdünnung bzw. Verbilligung der Klebstoffsysteme verwendet werden und im allgemeinen keinen positiven Beitrage zur Verklebung leisten.

Wäßrige, streckmittelfreie Emulsionen von Polyisocyanaten sind dagegen im allgemeinen nicht mit Auftragsmaschinen einzusetzen, verhärten an der Maschine, sind schwierig mit Wasser zu reinigen und schlagen zumeist auch beim Auftrag durchs Furnier und besitzen auch keine fugenfüllenden Eigenschaften.

Nicht erfindungsgemäße, für Vergleichszwecke hergestellte Leimflottendispersionen aus lediglich Polyisocyanaten, Wasser und nur Stärke bzw. Polyisocyanaten, Wasser und nur Mehlen, sind wegen des zu schnellen Ansteigens der Viskosität (kurze Topfzeit der Leimflottendispersion) praktisch ungeeignet. Außerdem erschwert die körnige Beschaffenheit der Ansätze mit nur Streckmehlen das gleichmäßige Auftragen. Auch Vergleichsversuche mit Carboxymethylcellulosen (anstelle von Stärke) und Mehlzusatz ergaben nur wenig geeignete Produkte und von Anfang an schaumige Struktur der Leimflottendispersionen und gelartiges Verhalten beim Auftragen.

Die erfindungsgemäßen wäßrigen Polyisocyanat-haltigen Leimflottendispersionen können auch mit den in der Holzindustrie bisher überwiegend eingesetzten wäßrigen Lösungen von Kondensationsprodukten aus Formaldehyd mit Harnstoff und/oder Melamin und/oder Phenol kombiniert werden (Phenol- bzw. Harnstoff bzw. Melamin/Formaldehyd-Klebstoffen). Auch eine Kombination mit Klebstoffrohstoffen wie Tanninen, Rindenextrakten, Sulfitablauge und Ligninsulfonaten, sowie mit natürlichen Klebstoffen auf der Basis von Eiweiß, wie z.B. Glutin, Casein oder Blutalbumin, als auch mit synthetischen Klebstoffen, wie Polyvinylacetat und Kunststofflatices, ist möglich. Das Mischungsverhältnis des in den erfindungsgemäßen Dispersionen enthaltenen Polyisocyanats mit diesen Klebstoffen bzw. Klebstoffrohstoffen kann insbesondere von 1:5 und 5:1 liegen.

Der Auftrag der Leimflottendispersionen auf die zu verklebenden Flächen kann beispielsweise mit einem Zahnspachtel oder mit üblichen Leimauftragsmaschinen erfolgen. Die Auftragsmengen hängen etwas von den zu verklebenden Substraten ab, doch liegen sie üblicherweise von 30 bis 300 g/m², vorzugsweise 50 bis 200 g/m² und insbesondere 70 bis 150 g/m².

Die Preßtemperaturen liegen üblicherweise bei 70-200°C, vorzugsweise 100 bis 150°C, insbesondere 110 bis 140°C. Die spezifischen Preßdrucke bei der Verklebung betragen 0,2 bis 10 N/mm², vorzugsweise 0,5 bis 3,5 N/mm². Die Preßzeiten liegen dabei in der Regel bei 30 bis 600 sec., vorzugsweise bei 60-300, insbesondere 90 bis 180 sec.

Gegenstand der Erfindung ist daher auch Verfahren zum Verleimen, insbesondere zum Verleimen von Funieren und anderen Beschichtungsmaterialien auf Holz- oder Holzwerkstoffen, indem man die die erfindungsgemäßen Leimflottendispersionen vorzugsweise in Mengen von 30-300 g/m² aufträgt und unter Anwendung eines spezifischen Preßdruck von 0,2-10 N/mm² bei Temperaturen von 70-200°C und Preßzeiten von 30-600 sec verpreßt, besonders bevorzugt unter Verwendung einer üblichen Leimauftragsmaschine.

In den nachfolgenden Beispielen wurden folgende Ausgangssubstanzen verwendet:

1. Organische Streckmittel
a) Streckmehle
- Bohnenmehlmischung (Bonit®, Fa. Werzel, Herford),
- Weizentypenmehle (1600 und 1050, Fa. Kampffmeyer, Köln/BRD)
- Roggentypenmehle (1370, Fa. Kampffmeyer, Köln/BRD)
- AHAMA®405 Roggen-/Weizenmehlmischung (Fa. Huber Mühle, Mannheim BRD)
b) Stärken
- kaltwasserlöslich (Amijel VA 159® und Snowflake 12610, Fa. Maizena, Kleve/BRD,
- nativ (Spezial Stärke W, Fa. Maizena, Kleve/BRD)
c) Carboxymethylcellulose (Vergleich)
- Methylan® (Fa. Henkel, Düsseldorf/BRD)
2. Anorganische Streckmittel (Vergleich)
- rheologische Additive (Bentone LT®, Fa. Kronos-Titan, Leverkusen/BRD)
3. Emulgierhilfsmittel (Vergleich)
- tierische Leimgallerte (Optal 1528®, Fa- Sichel, Hannover/BRD)
4. Harnstoff-Formaldehyd-Harz
- (Kaurit® 385 flüssig, Fa. BASF, Ludwirgshafen/BRD)

5. Polyisocyanate

| Produkt-Name | Chemische Bezeichnung | Gehalt an Isocyanat % | Viskosität mPa · s (25°C) |
|---|---|---|---|
| Desmodur® VP PU 1520 A31 | Lösungsmittelfreies Diphenylmethan-4,4'-diisocyanat mit einem Gehalt an höher funktionellen Isocyanaten (mittlere Funktionalität >2) | 30,5±1,5 | 300æ50 |
| Desmodur® VP PU 1194 | Lösungsmittelfreies Diphenylmethan-4,4'-diisocyanat mit einem Gehalt an höher funktionellen Isocyanaten (mittlere Funktionalität >2,3) | 30±1 | 2100 æ400 |
| Desmodur® 44 V20 | Lösungsmittelfreies Diphenylmethan-4,4'-diisocyanat mit einem Gehalt an höher funktionellen Isocyanaten (mittlere Funktionalität >2) | 30–32 | 200±40 |
| Desmodur® 44 VL | Lösungsmittelfreies modifiziertes Diphenylmethan-4,4'-diisocyanat mit einem Gehalt an höher funktionellen Isocyanaten (mittlere Funktionalität >2) | 31 | 120±25 |

Herstellung der Leimflottendispersionen.

Die Leimflottendispersionen (Zusammensetzungen siehe nachfolgende Tabellen) wurden wie folgt hergestellt:

Mit Streckmehlen (Vergleich)

Wasser vorlegen, Mehl beim Rühren langsam zugeben, PMDI (Polyphenylpolymethylenpolyisocyanate) hinzufügen, bei ca. 1500 Upm 30 sec rühren. ("Pendraulik®-Rührer")

Mit kaltwasserlöslicher Stärke, Carboxymethylcellulose oder Bentone LF (Vergleich)

Wasser vorlegen, Streckmittel beim Rühren langsam zugeben, 10 min weiterrühren, PMDI hinzufügen, bei ca. 1500 Upm 30 sec rühren.

Mit kaltwasserlöslicher Stärke bzw. aufgeschlossener nativer Stärke plus Streckmehl (erfindungsgemäß)

Wasser vorlegen, (kaltwasserlösliche) Stärke erst zugeben, 10 min rühren, Streckmehl einrühren bis homogen, PMDI hinzufügen, bei ca. 1500 Upm 30 sec rühren.

Tierische Leimgallerte (Vergleich)

4%ige Optal 1528-Lösung herstellen (lt. Herstellerangaben), PMDI hinzugeben und mit einem Ultra-Turrax® 30 sec rühren.

Leimflotte mit Harnstoffformaldehydharz

Ansetzen der Leimflotte lt. Produktmerkblatt Fa. BASF, Ludwigshafen/BRD.

Beurteilung der Gebrauchsdauer (Topfzeit) der Leimflottendispersionen (Zeitspanne, in der die Leimflottendispersion verarbeitbar ist)

- Eine optische Beurteilung im Becherglas hinsichtlich Homogenität und Viskositätsverlauf wurde in Abhängigkeit von der Zeit durchgeführt.
- An einigen Leimflottendispersionen wurde der Rest-NCO-Gehalt in Abhängigkeit zur Zeit gemessen.

Flächenverleimungsversuche

Versuchsbedingungen:

Trägerplatte: Spanplatten (V20, Fa. Deutsche Novopan)
Plattenabmessungen: 400 x 400 x 16 (bzw. 19) mm
Furnierart: Weißeiche, Roteiche, Rüster, Sen, Esche, Sipo-Mahagoni, Birnbaum, Kirsch
Furnierdicke: 0,5 - 0,65 mm
Leimauftragsmenge: 75, 90, 100, 150 g/m²
Auftragswerkzeuge: Zahnspachtel
Offene Zeit: ca. 3 min
Zulagebleche: Aluminium oben und unten
Preßtemperatur: 120, 140°C
Preßdruck (spez.): 1,0, 1,5, 3,0 N/mm²
Preßzeit: 60, 90, 120, 150, 180 sec

Prüfung der Verleimungsqualität

Bindefestigkeit

Die Prüfung der Bindefestigkeit der Versuchsverleimungen wurde in Anlehnung an DIN 53 255 (Aufstechversuch) durchgeführt. Eine zusätzliche Prüfung der Bindefestigkeit erfolgte durch Abziehen der überstehenden Furnierreste. Die Prüfergebnisse wurden durch folgende Rangfolgenummern (Benotung) gekennzeichnet:

1. vorzügliche Leimung
2. gute Leimung
3. ausreichende Leimung
4. unzureichende Leimung

Leimdurchschlag

Eine Bewertung des Leimdurchschlages erfolgte nach folgender Benotung:
(das Durchdringen des Leimes auf die Furnieroberfläche)

1. kein Durchschlag
2. vereinzelte kleine Flecken
3. mäßiger Durchschlag, flächig
4. starker Durchschlag auf gesamter Fläche

Beispiel 1

In einem zylinderförmigen Gefäß, das 100 g Wasser enthält, werden 26 g einer kaltwasserlöslichen Stärke (z.B. Amijel VA 159®, Fa. Maizena) bei gleichbleibender Zugabegeschwindigkeit und unter Verwendung eines Rührers mit einer Umdrehungsgeschwindigkeit von ca. 350 Upm eingemischt. Dieses Gemisch wird bei einer Umdrehungsgeschwindigkeit von ca. 1000 Upm 10 Minuten lang gerührt, bis die Stärke vollkommen aufgelöst und die Mischung homogen ist.

In dieses Gemisch werden 51 g Weizentypenmehl 1050 bei gleichbleibender Zugabegeschwindigkeit und unter Beibehaltung einer Umdrehungsgeschwindigkeit von ca. 500 Upm zugegeben. Die Mischung wird weiter gerührt bis ein homogenes Gemisch vorliegt. Schließlich werden dem Gemisch 44 g Polyphenyl-polymethylen-polyisocyanatgemisch (Desmodur® VP PU 1520 A31-Bayer AG, Leverkusen/BRD) zugegeben und solange gerührt, bis eine ausgezeichnete homogene, leicht sahnige Dispersion entsteht (11,8 Gew.-% Stärke, 23 Gew.-% Mehl, 19,9 Gew.-% Polyisocyanat, 45,3 Gew.-% Wasser; Viskosität = 1980 mPas/25°C). Die Mischung bleibt 2 bis 3 Stunden gut verarbeitbar (Topfzeit). Die Leimflottendispiersion kann mit Wasser glatt von den benutzten Werkzeugen abgespült werden.

Mit einer Auftragsmenge von 75 g/m² wird die Leimflottendisperion mit einem Zahnspachtel auf eine Spanplatte aufgetragen. Ein Edelfurnier wird auf die beleimte Spanplatte aufgelegt und bei 140°C 150 sec. lang verpreßt (1,5 N/mm² Anpreßdruck).

Es wird eine gute Bindefestigkeit zwischen Funier und Spanplatte ohne Leimdurchschlag erzielt.

Beispiel 2

Es wird verfahren wie in Beispiel 1. Statt 100 g Wasser werden 117 g Wasser verwendet. Darin werden 29 g einer kaltwasserlöslichen Stärke aufgelöst. 31 g Roggentypenmehl 1370 werden untergemischt und anschließend 44 g Polyisocyanat (von Beispiel 1) zugegeben und verrührt. Es wird eine homogene Leimflottendispersion (13,1 % Stärke, 14,0 % Trockenmehl, 19,9 % Polyisocyanat, 53 % Wasser) mit einer Viskosität von 2080 mPas/25°C erhalten. Mit gleichen Auftragsmengen und Preßbedingungen wie in Beispiel 1 beschrieben, werden furnierte Spanplatten guter Bindefestigkeit und ohne Leimdurchschlag hergestellt.

Beispiel 3

Es werden verschiedene erfindungsgemäße bzw. Vergleichsleimflottendispersionen mit den in der Tabelle 1 angegebenen Mengen hergestellt.

Tabelle 1: Eigenschaften der Leimflotten-Dispersion (PMDI = ®Desmodur VP PU 1520, A 31, Bayer AG, Leverkusen/BRD)

| Streckmittel | Leimflotten-dispersionen*) | Homogenität und Viskosität (mPas/25°C) | Topf-zeit h | % Rest-NCO in Leimflotten-dispersionen nach 0h | 4h | 6h | Verarbeitungs-fähigkeit |
|---|---|---|---|---|---|---|---|
| erfindungsgemäß | | | | | | | |
| kaltwasser-lösliche Stärke plus Getreide-mehl | 20% PMDI/45% $H_2O$ 12% Amijel® VA 159 23% Weizen 1050 | sehr gut ~2000 | 2–3 | 29 | 25 | 24 | geeignet |
| | 20% PMDI/53% $H_2O$ 13% Amijel® VA 159 14% Roggen 1370 | gut ~2000 | 1–2 | 30 | 28 | 26 | geeignet |
| Vergleiche | | | | | | | |
| Mehlmischungen alleine | 20% PMDI/53% $H_2O$ 27% AHAMA 405 | gut ~2000 mPas | <0,5 | 29 | 26 | **) | ungeeignet |
| | 20% PMDI/55% $H_2O$ 25% Bonit | gut ~2000 mPas | <0,5 | 28 | 23 | **) | ungeeignet |
| Getreidemehle alleine | 20% PMDI/54% $H_2O$ 26% Weizen 1050 | gut ~2000 mPas | 0,5–1 | 27 | 20 | **) | ungeeignet |
| | 20% PMDI/54% $H_2O$ 26% Weizen 1600 | gut ~2000 mPas | 0,5–1 | 28 | 22 | **) | ungeeignet |
| | 20% PMDI/65% $H_2O$ 15% Roggen 1370 | leichte Separierung nach ca. 30 min | <0,5 | 29 | 29 | **) | ungeeignet |
| kaltwasser-lösliche Stärke alleine | 20% PMDI/74% $H_2O$ 13% Amijel VA 159® | sehr gut ~2000 mPas | <0,5 | 25% | gummiartige Masse | | ungeeignet |
| | 20% PMDI/74% $H_2O$ 6% Snowflake 12610® | sehr gut | <0,5 | 26% | gummiartige Masse | | ungeeignet |
| kaltwasserlösliche Stärke + native Stärke | 20% PMDI/56% $H_2O$ 16% Amijel VA 159® 8% Spezial Stärke W | sehr gut | <0,5 | 24% | gummiartige Masse | | nicht geeignet |
| Carboxymethyl-cellulose (als Verdicker) | 16% PMDI/83% $H_2O$ 1% Methylat® | schaumig, leichte Inhomogenität | 1–2 | – | | | bedingt geeignet |
| Anorganische Verdicker | 20% PMDI/78% $H_2O$ 2% Bentone LT® | sehr schaumig inhomogen | 1–2 | – | | | ungeeignet |

*) Viskosität aller Leimflottendispersionen auf etwa 2000 mPa · s eingestellt
**) Lösung verpastet

Wie aus der Tabelle hervorgeht, sind die erfindungsgemäßen Leimflottendispersionen gut homogen, zeigen eine ausreichende Topfzeit und einen relativ geringen NCO-Abfall, selbst bei Lagerzeit über die Topfzeit hinaus. Ihre Verarbeitungsfähigkeit ist nach üblicher Zeit gut. Die Vergleichsversuche zeigen im wesentlichen eine zu kurze Topfzeit und eine ungeeignete Verarbeitungsfähigkeit bzw. schlechte Verarbeitungsergebnisse.

**Tabelle 2: Einfluß der Leimauftragsmenge auf die Verleimungsqualität von Furnier/Spanplatten**

| Leimansatz | Auftrags-menge g/m$^2$ | Bindefestigkeit (Benotung) | Leimdurchschlag (Benotung) |
|---|---|---|---|
| 20% PU 1520 A31® | 75 | 2 | 1 |
| 45% $H_2O$ | 90 | 2 | 1 |
| 12% Stärke (Amijel VA 159)® (wasserlöslich) | 100 | 2–3 | 2 |
| 23% Weizenmehl, Type 1050 | 150 | 2–3 | 3 |

Furnier-Holzart: Sen; Dicke: 0,5 mm;
Preßtemperatur: 120°C;
Preßsdruck: 1,5 N/mm²; Preßzeit: 150 sec

**Tabelle 3: Einfluß der Preßtemperatur auf die Bindefestigkeit bei verschiedenen Preßzeiten (Furnier/Spanplatte)**

| Leimansatz | Preß-temperatur | Preßzeit sec | Binde-festigkeit | Dampfblasen-bildung |
|---|---|---|---|---|
| 20% PU 1520® | 120°C | 120 | 2–3 | keine |
| A31 | | 150 | 2–(3) | keine |
| 45% $H_2O$ | | | | |
| 12% Stärke (Amijel VA 159)® (wasserlöslich) | | | | |
| 23% Weizenmehl, Type 1050 | 140°C | 90 | 2 | keine |
| | | 120 | 1–2 | keine |

Furnier-Holzart: Sen; Dicke: 0,5 mm; Preßdruck: 1,5 N/mm²;
Leimauftrag: 100 g/m²

Beispiel 4

**Tabelle 4: Vergleich der Verleimungsqualitäten von zwei Leimflotten mit Weizenmehl-Type 1050 bzw. Roggenmehl-Type 1370, jeweils als Mischung mit Stärke (erfindungsgemäß).**

| Streckmittel | Leimflotte (Leimauftragsmenge 75 g/m$^2$) | Preßzeit sec | Binde-festigkeit | Leimdurch-schlag |
|---|---|---|---|---|
| Weizenmehl 1050 | 20% PU 1520 | | | |
| | A31 | | | |
| | 45% $H_2O$ | | | |
| | 12% Stärke (wasserlöslich) | 120 | 2–3 | 1 |
| | 23% Mehl | 180 | 2 | 1 |
| Roggenmehl 1370 | 20% PU 1520 | 120 | 2 | 1 |
| | A31 | | | |
| | 53% $H_2O$ | | | |
| | 13% Stärke (wasserlöslich) | 150 | 1–2 | 1 |
| | 14% Mehl | 180 | 1–2 | 1 |

Furnier-Holzart: Weißeiche; Dicke: 0,65; Preßtemperatur: 140°C; Preßdruck: 1,5% N/mm²; Viskosität des Leimflottendispersion auf ca. 2000 mPa.s/25°C eingestellt.

Beispiel 5: Vergleich der Verleimungsqualitäten von zwei Leimflotten mit Weizenmehl 1050 bzw. kaltwasserlöslicher Stärke als alleinigem Streckmittel (Vergleichsversuche).

Tabelle 5: Vergleich der Verleimungsqualitäten von zwei Leimflotten mit Weizenmehl 1050 bzw. kaltwasserlöslicher Stärke als alleinigem Streckmittel (Vergleichsversuche).

| Streckmittel | Leimflotte (Leimauftragsmenge 75 g/m²) | Preßzeit sec | Bindefestigkeit (Benotungswerte) | Leimdurchschlag |
|---|---|---|---|---|
| nur Weizenmehl Type1050 | 20% PU 1520® A31 45% $H_2O$ 31% Weizen (inhomogen, nur kurze Zeit stabil) | 60 | 4 | 1 |
| | | 90 | 3–4 | 2 |
| | | 120 | 3 | 2 |
| | | 180 | 3 | 2 |
| nur kaltwasserlösliche Stärke (Amijel VA® 159) | 20% PU 1520® A31 61% $H_2O$ 19% Stärke | 60 | 4 | 1 |
| | | 90 | 3–4 | 3 |
| | | 120 | 3–4 | 3 |
| | | 180 | 3–4 | 3 |

Furnier-Holzart: Roteiche; Dicke: 0,65 mm; Preßtemperatur: 140°C, Preßdruck: 1,5N/mm²; Viskosität der Leimflotten ca. 2000 mPa.s/25°C.

Beispiel 6 (erfindungsgemäß / vgl. Beispiel 7/Vergleich -)

Tabelle 6: Einfluß des PMDI-Anteils auf die Verleimungsqualität

| Leimflottendispersion Komponententeile in Gew.-% | | | | Verleimungsqualität | |
|---|---|---|---|---|---|
| PMDI Desmodur VP PU® 1520 A 31 | $H_2O$ | kaltwasserlösliche Stärke (Amijel VA 159®, Fa. Maizena) | Weizenmehl 1050 | Bindefestigkeit | Leimdurchschlag |
| 7 | 52 | 11 | 30 | 3–4 | 1 |
| 15 | 48 | 11 | 26 | 2 | 1 |
| 20 | 46 | 11 | 23 | 2 | 1 |
| 50 | 30 | 11 | 9 | 2–3 | 3 |

Holzart: Sen; Dicke: 0,6 mm; Preßtemperatur: 140°C; Preßdruck: 1,5N/mm²; Preßzeit: 150 sec; Leimauftrag: 75 g/m².

Beispiel 7: (Vergleich) Einfluß des PMDI-Anteils auf die Leimungsqualität (nur Stärke als Streckmittel).

Tabelle 7

| Leimflottendispersion | PMDI Anteil % | Bindefestigkeit | Leimdurchschlag |
|---|---|---|---|
| 27%ige kaltwasserlösliche Stärke | | | |
| Lösung | 7 | 3–4 | 2 |
| + | 15 | 3 | 2 |
| PMDI-Anteil | 20 | 3 | 2–3 |
| (PU 1520 A3®1) | 50 | 2–3 | 4 |

Holzart: Rüster; Dicke: 0,5 mm; Preßtemperatur: 140°C; Preßdruck: 1,5 N/mm²; Preßzeit: 150 sec; Leimauftrag: 100 g/m²

Mit diesem Vergleichsbeispiel wird gezeigt, daß sowohl Bindefestigkeit wie der Leimdurchschlag bei Verwendung von lediglich Stärke als Streckmittel ungenügend ist.

Beispiel 8

Es wird verfahren wie in Beispiel 1. Statt 100 g Wasser werden 96 g Wasser verwendet. Darin werden 24 g einer kaltwasserlöslichen Stärke (z.B. Amijel VA 146 oder Amijel VA 159®, Fa. Maiezena) aufgelöst. 60 g Weizentypenmehl 160 werden untergemischt und anschließend 60 g Desmodur®, 44 VL (BAYER AG, D 5090 Leverkusen) zugegeben und homogen verrührt. Mit einer Auftragsmenge von 75 g/m² wird die Leimflottendispersion mit einem Zahnspachtel auf eine V20 Spanplatte aufgetragen. Ein 0,6 mm dickes Weißeichefunier wird auf die beleimte Spanplatte gelegt und das Ganze wird bei ca. 140°C und mit 1,5 n/mm² Preßdruck 150 sec lang verpreßt. Es wird eine gute Bindefestigkeit zwischen Funier und Spanplatte ohne Leimdurchschlag erreicht.

Beispiel 9

Es wird verfahren wie in Beispiel 1. In 100 g $H_2O$ werden 20 g einer wasserlöslichen Stärke (Amijel VA 159®, Fa. Maizena) aufgelöst. 22 g einer Bohnenmehlmischung (Bonit®, Fa. Werzel) werden untergemischt und anschließend 36 g Desmodur® VP PU 1520 A 31 zugegeben und homogen verrührt. Mit dieser Leimflottendispersion können, wie in Beispielen 1 und 9 beschrieben, furnierte Spanplatten unter gleichen Leimauftrags- und Preßbedingungen hergestellt werden. Auch hier werden gute Verleimungsqualitäten erzielt.

Beispiel 10

22 g einer wasserlöslichen Stärke (Amijel VA 159®; Fa. Maizena) werden nach dem Verfahren von Beispiel 1 in 54 g Wasser aufgelöst. Diesem Gemisch werden 44 g Weizentypenmehl 1050 zugegeben und homogen verrührt. In einem anderen Gefäß, das 40 g eines wäßrigen 4 %igen Leim-Lösung (Emulgator: Optal® T 1528, Fa. Sichel, D 2000 Hannover enthält, werden 40 g Desmodur® PU VP 1520 A 31 zugegeben und mit einem Ultra-Turrax®-Mischer 30 sec. verrührt. Es entsteht eine wäßrige Polyisocyanat-Emulsion. Diese wird dem Stärke/Mehl-Gemisch unter Verwendung eines Rührers bei ca. 500 Upm eingemischt. Nach ca. 15 sec. entsteht eine homogene Vermischung.

Diese Art der Herstellung der Leimflottendispersion mit einem zusätzlichen Emulgator ist aufwendiger, zeigt aber trotzdem keine erkennbaren Vorteile gegenüber dem Herstellungsverfahren, wie in Beispiel 1 beschrieben. Sowohl die Gebrauchsdauer als auch die Verarbeitbarkeit des Leimansätze sind ähnlich. Auch ein Vergleich der Verleimungsqualität zeigt keine Unterschiede.

Beispiel 11

Es wird verfahren wie im Beispiel 1. In 98 g $H_2O$ werden 26 g (Amijel VA 159®) kaltwasserlösliche Stärke aufgelöst. 36 g Weizentypenmehl 1050 werden der Stärkelösung zugegeben und homogen vermischt. Anschließend werden 40 g Desmodur® P PU 1194; Viskosität des Polyisocyanats ca. 2000 mPa.s) dem Gemisch zugesetzt und homogen verrührt. Mit einer Auftragsmenge von 75 g/m², einer Preßtemperatur von 140°C, einem spezifischen Preßdruck von 1,5 N/mm² und einer Preßzeit von 150 sec wird eine Spanplatte mit einem 0,6 mm dicken Sipo-Mahagoni Furnier furniert. Es wird eine gute Bindefestigkeit ohne Durchschlag erzielt. Die Leimflottendisperion zeichnet sich durch eine etwas längere Gebrauchsdauer (im Vergleich um Ansatz im Beispiel 1) aus (ca. 3,5 Std.).

Beispiel 12

Durch Zusatz von bekannten Polyurethan-Aktivatoren (z.B. tertiäre Amine) können die Preßzeiten verkürzt werden. Es wird verfahren wie im Beispiel 1. In 100 g Wasser werden 26 g (Amijel VA 159®) kaltwasserlösliche Stärke aufgelöst. 40 g Weizentypenmehl 1050 werden der Stärkelösung zugegeben und homogen vermischt. In dieses Gemisch werden 0,4 g Desmorapid® VP PU 1343*) (1 % bezogen auf PM-DI) eingerührt. Anschließend werden 40 g Desmodur® VP PU 1520 A 31 zugegeben und homogen vermischt. Mit dieser Leimflottendispersion wird bei einer Auftragsmenge von 75 g/m², einer Preßtemperatur von 140°C, einem spezifischen Preßdruck von 1,5 N/mm² und einer Preßzeit von 100 sec eine Spanplatte mit einem 0,6 mm dicken Sipo-Mahagoni Furnier furniert. Die Verleimungsqualität ist bei dieser Preßzeit gleichwertig mit der von 150 sec, z.B. Beispiel 1. Die Gebrauchsdauer des Leimflottendispersion ist allerdings kürzer, ca. 1 1/2 Stunde.

*) Desmorapid® VP PU 1343 ist ein tert.-Amin-Katalysator der BAYER AG, D-5090 Leverkusen

Beispiel 13

Die erfindungsgemäßen Leimflottendispersionen können auch in Mischung mit Kondensationsharzen, z.B. Harnstoff-Formaldehyd-Harzen, verwendet werden.

Es wird verfahren wie im Beispiel 1. In 100 g Wasser werden 26 g kaltwasserlösliche Stärke (z.B. Amijel VA 159®, Fa. Maizena) aufgelöst. 40 g Weizentypenmehl 1600 werden der Stärkelösung zugegeben und vermischt. In dieses Gemisch werden 80 g eines Harnstoff-Formaldehyd-Harzes (66,5 % Feststoff, Kaurit-Leim 385 flüssig, Fa. BASF) zusammen mit 8 g Härter-40 Pulver (Fa. BASF) zugegeben und homogen verrührt. Anschließend werden 40 g (PMDJ) Desmodur® PU 1520 A 31 zugesetzt und homogen emulgiert. Unter gleichen Leim-Auftrags- und Preßbedingungen wie im Beispiel 11 werden Edelfurniere (z.B. 0,6 mm dicke Sipo-Mahagoni-, Weißeiche- oder Esche-Funiere) auf Spanplatten funiert. Die Verleimungsqualität dieser fertigen Produkte ist vergleichbar mit der Qualität der Furnieren ohne Kondensationsharz. Eine Mischverleimung mit Kondensationsharze hat allerdings der Nachteil, daß die Verleimung nichtmehr formaldehydfrei ist.

Beispiel 14

**Tabelle 10: Einfluß des PMDI-Typs auf die Gebrauchsdauer**

**Leimflottendispersionen**) mit erfindungsgemäßer Kombination Stärke/Mehl**

| PMDI-Typ | Leimflottendispersion | Gebrauchsdauer h | Rest-NCO % 0 h | Rest-NCO % 4 h |
|---|---|---|---|---|
| Desmodur® VP PU 1520 A 3 | 20% PMDI/45% $H_2O$ 12% Stärke*)23% Weizen 1050 | 2–3 | 28 | 25 |
| Desmodur® VP PU 1194 | 20% PMDI/49% $H_2O$ 13% Stärke/18g Weizen 1050 | 3 | 29 | 28 |
| Desmodur® 44 V 20 | 20% PMDI/45% $H_2O$ 12% Stärke/23% Weizen 1050 | 1–2 | 28 | 27 |
| Desmodur® 44 VL | 20% PMDI/45% $H_2O$ 12% Stärke/23% Weizen 1050 | 1–2 | 29 | 27 |

*) kaltwasserlösliche Stärke, (Amijel VA 159® Fa. Maizena)
**) ca. 2000 mPa · s/25°C

## Patentansprüche

1. Wäßrige, Polyisocyanat-haltige Leimflottendispersionen mit einem Feststoffgehalt von 22–65 Gew.-% und einer Viskosität von 500–10 000 mPa.s/25°C enthaltend
7–50 Gew.-% Polyphenyl-polymethylen-polyisocyanate mit einer Viskosität von 50–5000 mPa.s/25°C, vorzugsweise 50–1250 mPa.s und einem NCO-Gehalt von 26 bis 33 Gew.-%, vorzugsweise 28–32%, und einer mittleren Funktionalität >2, vorzugsweise ≥2,3 und eine Streckmittelmischung auf Basis
5–20 Gew.-% wasserlösliche Stärke und
10–35 Gew.-% Mehle und
gegebenenfalls untergeordnete Mengen üblicher Additive.

2. Leimflottendispersionen nach Anspruch 1, dadurch gekennzeichnet, daß sie
15–30 Gew.-% aromatische Polyisocyanate mit einer mittleren Funktionalität >2,0
10–15 Gew.-% wasserlösliche Stärke und
14–25 Gew.-% Mehle und
gegebenenfalls untergeordnete Mengen üblicher Additive enthalten und einen Feststoffgehalt von 29–65 Gew.-% und eine Viskosität im Bereich von 1000 bis 4000 mPa.s/25°C aufweisen.

3. Leimflottendispersionen nach Ansprüchen 1 und 2, dadurch gekennzeichnet, daß als Stärke kaltwasserlösliche oder aufgeschlossene native Stärke und als Mehle Weizen-, Roggen- oder Bohnenmehle und/oder deren Mischungen eingesetzt werden.

4. Leimflottendispersionen nach Ansprüchen 1–3, abgemischt mit üblichen Klebstoffsystemen auf Basis wäßriger Lösungen von Phenol-, Harnstoff- oder Melamin/Formaldehyd-Klebstoffen und/oder Tanninen, Rindenextrakten, Sulfitablauge, Ligninsulfonaten, natürlichen Klebstoffen auf Eiweißbasis oder synthetischen Klebstoffen
im Mengenverhältnis von 1:10 bis 10:1, vorzugsweise 1:4 und 4:1.

5. Verfahren zur Herstellung der Leimflottendispersionen nach Ansprüchen 1–4, dadurch gekennzeichnet, daß man eine wäßrige Stärkelösung mit den Mehlen vermischt und in dieser Mischung das Polyisocyanat bei Temperaturen bis 45°C emulgiert oder in wäßriger Stärkelösung das Polyisocyanat emulgiert und anschließend die Mehle einmischt.

6. Verfahren zum Verleimen, insbesondere zum Verleimen von Furnieren und anderen Beschichtungsmaterialien auf Holz- oder Holzwerkstoffen, dadurch gekennzeichnet, daß man die Leimflottendispersionen nach Ansprüchen 1–4 in Mengen von 30–300 g/m² aufträgt und unter Anwendung von spezifischen Preßdrücken von 0,2–10 N/mm² bei Preßtemperaturen von 70–200°C und Preßzeiten von 30–600 sec. verpreßt.

7. Verfahren nach Anspruch 6, dadurch gekennzeichnet, daß der Auftrag der Leimflottendispersion mittels üblicher Leimauftragsmaschinen erfolgt.

**Claims**

1. Aqueous, polyisocyanate-containing glue liquor dispersions having a solids content of 22 to 65% by weight and a viscosity of 500 to 10,000 mPa.s/25°C and containing 7 to 50% by weight polyphenyl polymethylene polyisocyanates having a viscosity of 50 to 5,000 mPa.s/25°C, preferably 50 to 1,250 mPa.s; an NCO content of 26 to 33% by weight, preferably 28 to 32% by weight; and an average functionality of >2, preferably ≥ 2.3
and an extender mixture based on
5 to 20% by weight water-soluble starch and
10 to 35% by weight flours and
optionally small quantities of standard additives.

2. Glue liquor dispersions as claimed in claim 1, characterized in that they contain
15 to 30% by weight aromatic polyisocyanates having an average functionality of >2.0,
10 to 15% by weight water-soluble starch and
14 to 25% by weight flours and
optionally small quantities of standard additives
and have a solid contents of 29 to 65% by weight and a viscosity in the range from 1,000 to 4,000 mPa.s/25°C.

3. Glue liquor dispersions as claimed in claims 1 and 2, characterized in that cold-water-soluble or digested native starch is used as the starch while wheat flour, rye flour or bean flour and/or mixtures thereof are used as the flours.

4. Glue liquor dispersions as claimed in claims 1 to 3 mixed with standard adhesive systems based on aqueous solutions of phenol, urea or melamine/formaldehyde adhesives and/or tannins, bark extracts, spent sulfite liquor, lignin sulfonates, natural protein-based adhesives or synthetic adhesives in a quantitative ratio of 1:10 to 10:1 and preferably 1:4 to 4:1.

5. A process for the production of the glue liquor dispersions claimed in claims 1 to 4, characterized in that an aqueous starch solution is mixed with the flours and the polyisocyanate is emulsified in the resulting mixture at temperatures of up to 45°C or the polyisocyanate is emulsified in aqueous starch solution and the flours are subsequently mixed in.

6. A glueing process, more especially for glueing veneers and other coating materials to wood or wood materials, characterized in that the glue liquor dispersions claimed in claims 1 to 4 are applied in quantities of 30 to 300 g/m², followed by pressing for 30 to 600 seconds at temperatures of 70 to 200°C under specific pressures of 0.2 to 10 N/mm².

7. A process as claimed in claim 6, characterized in that the glue size dispersion is applied by standard glue application machines.

**Revendications**

1. Dispersions aqueuses de bains de colle contenant des polyisocyanates et ayant une teneur en matières solides de 22–65% en poids et une viscosité de 500–10 000 mPa.s/25°C, ces dispersions contenant:
7–50% en poids de polyphényl-polyméthylène-polyisocyanates d'une viscosité de 50–5000 mPa.s/25°C, de préférence, de 50–1250 mPa.s et une teneur en groupes NCO de 26 à 33% en poids, de préférence, de 28–32% en poids, avec une fonctionnalité moyenne >2, de préférence, de ≥ 2,3,
et un mélange de diluants à base de
5–20% en poids d'amidon hydrosoluble, et
10–35% en poids de farine, et éventuellement de faibles quantités d'additifs habituels.

2. Dispersions de bains de colle selon la revendication 1, caractérisées en ce qu'elles contiennent:
15–30% en poids de polyisocyanates aromatiques d'une fonctionnalité moyenne >2,0,

10–15% en poids d'amidon hydrosoluble, et
14–25% en poids de farine, et
éventuellement de faibles quantités d'additifs habituels, tout en ayant une teneur en matières solides de 29–65% en poids et une viscosité se situant dans l'intervalle allant de 1.000 à 4.000 mPa.s/25°C.

3. Dispersions de bains de colle selon les revendications 1 et 2, caractérisées en ce que, comme amidons, on utilise des amidons naturels solubles dans l'eau froide ou désagrégés et, comme farines, on utilise de la farine de froment, de la farine de seigle ou de la farine de haricots et/ou leurs mélanges.

4. Dispersions de bains de colle selon les revendications 1 à 3, en mélange avec des systèmes habituels d'adhésifs à base de solutions aqueuses d'adhésifs de phénol, d'urée ou de mélamine/formaldéhyde et/ou des tanins, des extraits de bœuf, de la lessive résiduaire de sulfite, des lignosulfonates, des adhésifs naturels à base d'albumine ou des adhésifs synthétiques,
dans un rapport quantitatif de 1:10 à 10:1, de préférence, de 1:4 et de 4:1.

5. Procédé de préparation de dispersions de bains de colle selon les revendications 1–4, caractérisé en ce qu'on mélange une solution aqueuse d'amidon avec les farines et, dans ce mélange, on émulsionne le polyisocyanate à des températures allant jusqu'à 45°C ou on émulsionne dans une solution aqueuse d'amidon du polyisocyanate, puis on y mélange la farine.

6. Procédé d'encollage, en particulier, pour l'encollage de contre-collages et d'autres matières d'enduction sur du bois ou des matières premières en bois, caractérisé en ce qu'on applique les dispersions de bains de colle selon les revendications 1–4 en quantités de 30–300 g/m² et on presse en appliquant des pressions spécifiques de 0,2–10 N/mm² à des températures de 70–200°C et pendant des laps de temps de 30–600 secondes.

7. Procédé selon la revendication 6, caractérisé en ce que l'application de la dispersion de bain de colle a lieu au moyen de machines habituelles d'application de colle.